# FASCICULE DE BREVET EUROPEEN

(11) **EP 3 590 759 B1**
(45) Date de publication et mention de la délivrance du brevet: **12.07.2023**
(21) Numéro de dépôt: 19182841.7
(22) Date de dépôt: 27.06.2019
(51) Int. Cl.: B60N 2/75, B61D 33/00, B64D 11/06, B60N 2/02

(54) **SIÈGE PASSAGER D'UN VÉHICULE DE TRANSPORT ET VÉHICULE DE TRANSPORT EQUIPÉ DE TELS SIÈGES**
PASSAGIERSITZ IN EINEM TRANSPORTFAHRZEUG UND MIT SOLCHEN SITZEN AUSGESTATTETES TRANSPORTFAHRZEUG
PASSENGER SEAT OF A TRANSPORT VEHICLE AND TRANSPORT VEHICLE EQUIPPED WITH SUCH SEATS

(30) Priorité: 03.07.2018 FR 1856113
(43) Date de publication de la demande: 08.01.2020
(73) Titulaire: SNCF Mobilités, 93200 Saint-Denis (FR)
(72) Inventeur: LABARRE, Jérôme, 72000 Le Mans (FR); JOUANNY, Franck, 72220 Ecommoy (FR)
(74) Mandataire: Bringer IP

(56) Documents cités:
- DE-A1- 3 432 084
- DE-C2- 3 432 084
- FR-A1- 2 836 102
- FR-A1- 2 883 527
- FR-B1- 2 836 102

## Description

### 1. Domaine technique de l'invention

L'invention concerne un siège d'un véhicule de transport, en particulier d'un véhicule de transport ferroviaire.

### 2. Arrière-plan technologique

Un véhicule de transport, tel qu'un véhicule de transport ferroviaire ou un véhicule de transport aérien comprend de manière connue une pluralité de sièges passagers qui sont montés dans l'espace intérieur du véhicule délimité par des parois latérales en une pluralité de rangées (couramment désigné par le terme de « cabine » pour un véhicule aérien et par le terme de « voiture » ou « wagon » pour un véhicule ferroviaire). Un tel véhicule comprend en outre au moins un couloir central qui s'étend selon une direction longitudinale correspondant en général à la direction de déplacement du véhicule (ou deux couloirs longitudinaux pour les véhicules de plus grande envergure) qui permet la circulation des passagers dans l'espace intérieur du véhicule.

Lors de la conception des aménagements intérieurs des véhicules de transport, et notamment les véhicules ferroviaires, les différentes options possibles sont limitées par le gabarit du véhicule qui est imposé par les contraintes de circulation du train. En d'autres termes, les dimensions d'un train (hauteur, longueur et largeur) sont limitées de sorte que l'aménagement intérieur du véhicule est également contraint par ce gabarit. Aussi, un certain compromis doit être trouvé notamment entre l'épaisseur des parois latérales (pour améliorer le confort acoustique), la largeur des couloirs (pour faciliter la circulation des passagers), les dimensions des coffres à bagages (pour faciliter le rangement des bagages) et la largeur des sièges passagers (pour le confort des passagers).

Dans un objectif de gagner de la place, il est fréquent que les cabines d'avion ou les voitures d'un train, en particulier des classes économiques, soient munies de sièges adjacents partageant un accoudoir, au détriment du confort des passagers.

En outre, que les sièges adjacents partagent ou non un accoudoir, il est toujours nécessaire de faire un compromis entre un accoudoir large et une assise large. En effet, à encombrement transversal égal, plus l'accoudoir est large et plus l'assise est limitée. A l'inverse, plus l'assise est large et plus l'accoudoir est limité.

Il existe donc un compromis à faire entre le confort de l'assise et le confort des bras des passagers. Ce compromis est fait par le concepteur de l'aménagement intérieur et est figé une fois pour toutes.

Le document FR2883527 décrit un siège de véhicule automobile comportant un accoudoir escamotable capable de passer, par un demi-tour, d'une première position d'utilisation à une deuxième position d'utilisation, chaque position pouvant présenter un revêtement spécifique. Le siège décrit dans ce document permet ainsi de choisir le type de revêtement de l'accoudoir utilisé. En revanche, ce siège ne permet pas de choisir l'encombrement de l'accoudoir et donc la surface assise disponible.

Les inventeurs ont cherché à proposer une solution alternative permettant à chaque passager d'arbitrer lui-même le compromis à faire entre une assise large et un accoudoir large. En effet, les inventeurs ont réalisé que chaque passager peut, selon sa morphologie, son humeur, etc. préférer une configuration plutôt qu'une autre, d'un voyage à l'autre, ou même au cours d'un même voyage.

### 3. Objectifs de l'invention

L'invention vise à fournir un siège passager d'un véhicule de transport, notamment ferroviaire, qui pallie au moins certains des inconvénients des sièges connus.

L'invention vise en particulier à fournir, dans au moins un mode de réalisation de l'invention, un siège passager d'un véhicule de transport qui permet au passager d'arbitrer lui-même le compromis entre une assise large et des accoudoirs larges.

L'invention vise aussi à fournir, dans au moins un mode de réalisation de l'invention, un siège passager d'un véhicule de transport qui permet au passager de choisir lui-même la configuration des accoudoirs entre aux moins deux configurations prédéterminées.

L'invention vise à fournir un tel siège qui ne nécessite pas de moyens techniques complexes pour sa mise en oeuvre.

L'invention vise également à fournir un tel siège qui peut être agencé dans les cabines des véhicules de transport aériens ou les voitures des véhicules de transport ferroviaire sans nécessiter un réaménagement substantiel des autres éléments des espaces intérieurs.

L'invention vise également à fournir un véhicule de transport, notamment ferroviaire, équipé de sièges passagers selon l'invention.

### 4. Exposé de l'invention

Pour ce faire, l'invention concerne un siège passager d'un véhicule de transport, notamment ferroviaire, comprenant une assise s'étendant dans un plan, dit plan horizontal, un dossier et au moins un accoudoir latéral destiné à former au moins une surface d'appui horizontal d'un bras d'un passager assis sur ladite assise et adossé audit dossier dudit siège passager.

Un siège passager selon l'invention est caractérisé en ce qu'au moins un accoudoir latéral est monté sur ledit siège de façon à pouvoir passer d'une première position, dite position de confort-bras, dans laquelle ledit accoudoir présente une première surface d'appui horizontal maximal de réception d'un bras d'un passager, vers au moins une deuxième position, dite position de confort-assise, dans laquelle ledit accoudoir présente une deuxième surface d'appui horizontal minimal, non nul de réception d'un bras d'un passager, distincte de ladite première surface d'appui horizontal maximal.

Un siège selon l'invention permet donc au passager de choisir lui-même la configuration souhaitée pour son siège entre une première configuration et une deuxième configuration, chaque configuration étant définie par la surface d'appui horizontal présentée au passager pour y poser son bras.

Chaque surface peut présenter des formes et/ou dimensions distinctes l'une de l'autre. Par exemple, la surface d'appui de la première position peut être bombée alors que la surface d'appui de la deuxième position peut être en creux. Différentes variantes sont possibles et permettent d'offrir différents types de conforts au passager.

Un siège selon l'invention permet donc au passager de choisir lui-même la configuration souhaitée pour son siège entre une configuration dans laquelle au moins un accoudoir présente une surface d'appui maximal pour son bras, ce qui lui permet de reposer de manière optimale son bras au cours du voyage, et une configuration dans laquelle l'accoudoir présente une surface d'appui minimal et non nul, ce qui lui permet de reposer son bras tout en libérant davantage de place pour l'assise qui s'étend en partie sous l'accoudoir.

Un siège selon l'invention permet également d'adapter la configuration du siège à différentes morphologies de passagers et notamment à la fois aux enfants et aux adultes, en permettant d'adapter la surface de l'assise disponible et la largeur des accoudoirs.

De préférence, le siège comprend deux accoudoirs latéraux, chaque accoudoir étant monté sur ledit siège de façon à pouvoir passer d'une position de confort-bras dans laquelle il présente une surface d'appui horizontal maximal, vers au moins une position de confort-assise, dans laquelle il présente une surface d'appui horizontal minimal, non nul.

Avantageusement et selon l'invention, le siège comprend en outre des moyens d'actionnement de chaque accoudoir, configurés pour pouvoir passer chaque accoudoir de ladite position de confort-bras à ladite position de confort-assise et inversement.

Les moyens d'actionnement permettent de déplacer les accoudoirs de la position de confort-bras à la position de confort-assise. Ces moyens d'actionnement peuvent être des moyens de manoeuvre actionnés directement par le passager ou des moyens motorisés, électriques, pneumatiques ou hydrauliques, reliés à une unité de commande pilotée par le passager.

Avantageusement et selon l'invention, ladite surface d'appui horizontal maximal présente une longueur *LO* et une largeur *LAmax* et ladite surface d'appui horizontal minimal présente une longueur *LO* et une largeur *LAmin,* inférieure à la largeur *LAmax.*

Selon cette variante avantageuse, la longueur de l'accoudoir est la même dans la position de confort-bras que dans la position de confort-assise de sorte que seule la largeur de l'accoudoir varie d'une position à l'autre.

Selon d'autres variantes néanmoins, la longueur et la largeur peuvent changer d'une position à l'autre.

Avantageusement et selon l'invention, au moins un accoudoir latéral - notamment chaque accoudoir latéral - est configuré pour pouvoir, en outre, être placé dans une position, dite position intermédiaire, dans laquelle ledit accoudoir présente une troisième surface d'appui horizontal, distincte desdites première et deuxième surface d'appui horizontal.

Selon cette variante avantageuse, un accoudoir latéral peut présenter au moins une position intermédiaire entre la position de confort-bras et la position de confort-assise.

Avantageusement et selon l'invention, au moins un accoudoir latéral - notamment chaque accoudoir latéral - présente une forme parallélépipédique s'étendant le long d'une direction, dite direction longitudinale, et dont au moins deux surfaces longitudinales présentent des surfaces d'appui différentes de manière à pouvoir former au moins ladite surface d'appui minimal de ladite position confort-assise et ladite surface d'appui maximal de ladite position confort-bras, et il comprend en outre une articulation portée par ladite assise ou ledit dossier adaptée pour pouvoir faire pivoter ledit accoudoir autour d'un axe longitudinal entre ladite position de confort-bras et ladite position de confort-assise.

Selon cette variante, l'accoudoir présente la forme d'un parallélépipède et comprend donc quatre faces dont deux sont différentes de manière à pouvoir former les deux surfaces d'appui de la position confort-bras et de la position confort-assise en pivotant l'accoudoir autour d'un axe longitudinal.

En variante, l'accoudoir peut présenter une forme permettant que les quatre faces soient de dimension et/ou de forme différente de manière à pouvoir former quatre positions de confort différentes. Chaque position peut présenter une forme distincte, par exemple une position présente une courbure concave, une autre présente une courbure convexe, une autre présente une surface lisse, etc.

Avantageusement et selon l'invention, au moins un accoudoir comprend une paroi équipée d'une membrane élastique déformable latéralement qui délimite une enceinte de réception d'un fluide, et le siège comprend en outre des moyens pneumatiques de mise sous pression de ladite enceinte adaptés pour pouvoir déformer ladite membrane élastique dudit accoudoir de manière à former ladite surface d'appui maximal de ladite position de confort-bras ou ladite surface d'appui minimal de ladite position de confort-assise en fonction de ladite pression du fluide injecté dans ladite enceinte.

Selon une autre variante de réalisation, au moins un accoudoir latéral comprend une pluralité de baguettes montées chacune mobile en rotation entre une position relevée dans laquelle elle s'étend sensiblement parallèlement audit dossier dudit siège et une position déployée dans laquelle elle s'étend sensiblement parallèlement à ladite assise dudit siège, lesdites baguettes formant ladite position de confort-bras dudit accoudoir lorsqu'elles sont toutes dans la position déployée, et formant ladite position de confort-assise lorsque seule la baguette latéralement la plus extrême est dans ladite position déployée, les autres baguettes étant dans la position relevée.

Avantageusement et selon l'invention, au moins un accoudoir - notamment chaque accoudoir - est monté sur une articulation pivotante configurée pour pouvoir déplacer ledit accoudoir d'une position relevée dans laquelle il s'étend sensiblement parallèlement audit dossier dudit siège, à une position déployée dans laquelle il s'étend sensiblement parallèlement à ladite assise dudit siège et dans laquelle il peut être déplacé de ladite position de confort-bras à ladite position de confort-assise.

L'invention concerne également un véhicule de transport comprenant une pluralité de sièges passagers, caractérisé en ce qu'au moins un siège passager est un siège selon l'invention.

L'invention concerne également un siège passager et un véhicule de transport caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique en perspective de deux sièges passagers adjacents selon un mode de réalisation de l'invention, dans laquelle les bras sont dans la position de confort-assise,
- la figure 2 est une vue schématique en perspective de deux sièges passagers adjacents selon un mode de réalisation de l'invention, dans laquelle les bras sont dans la position de confort-bras,
- les figures 3, 4, 5 et 6 sont des vues schématiques d'un accoudoir d'un siège passager selon un mode de réalisation de l'invention illustrant l'articulation permettant le passage de l'accoudoir d'une position de confort-bras à une position de confort-assise.

### 6. Description détaillée d'un mode de réalisation de l'invention

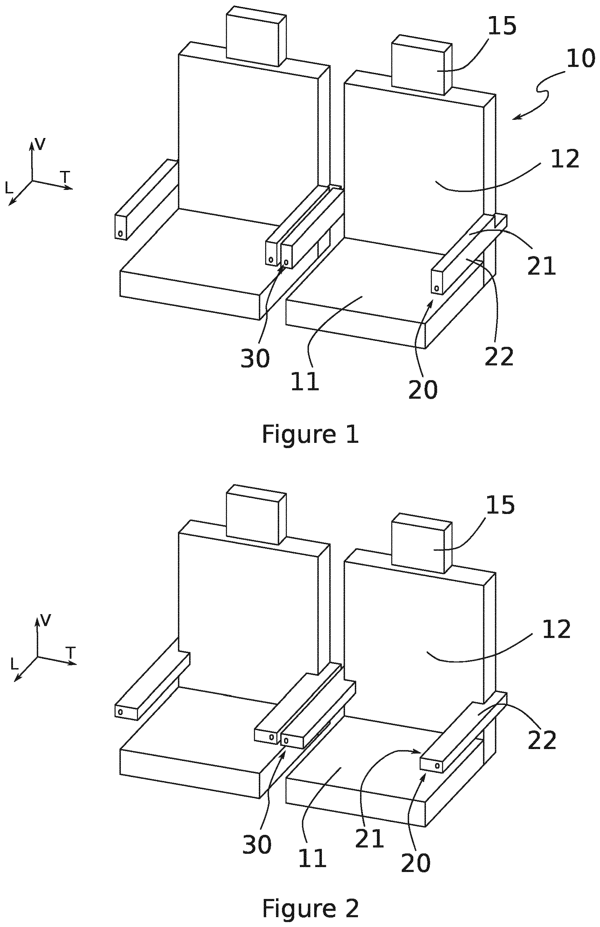

Sur les figures, les échelles et les proportions ne sont pas strictement respectées et ce, à des fins d'illustration et de clarté. Les éléments identiques, similaires ou analogues sont désignés par les mêmes références dans toutes les figures. Enfin, les termes longitudinal, transversal et vertical sont utilisés à titre non limitatif en référence au trièdre L, T, V tel que représenté sur la figure 1. La direction longitudinale correspond à la direction principale de déplacement d'un véhicule de transport dans lequel un siège selon l'invention est destiné à être installé pour qu'un passager puisse être assis dans le sens de la marche ou dos au sens de la marche. Bien entendu, un siège selon l'invention peut également être installé différemment dans le véhicule, notamment perpendiculairement au sens de la marche, auquel cas la direction longitudinale est la direction qui s'étend en face du passager assis dans ledit siège. La direction verticale est la direction définie par la gravité. La direction transversale est la direction perpendiculaire à la direction longitudinale et à la direction verticale.

L'invention est décrite ci-après en relation avec un siège d'un véhicule ferroviaire. Cela étant, l'invention s'applique *mutatis mutandis* à tous types de véhicules de transport de passagers, notamment des aéronefs, des autobus, des voitures, des bateaux, etc.

En outre, l'invention est décrite en relation avec un couple de sièges, généralement utilisé dans les voitures des véhicules ferroviaires, sans que cela ne soit limitatif de la portée de l'invention quant au nombre de sièges adjacents.

Les figures 1 et 2 illustrent un couple de sièges de passagers, respectivement dans une première configuration des accoudoirs (figure 1) et une deuxième configuration des accoudoirs (figure 2). Dans toute la suite, seul un siège est décrit en détail, étant entendu, que les deux sièges adjacents présentent des architectures identiques.

Le siège 10 passager du véhicule de transport comprend une assise 11 destinée à recevoir le postérieur d'un passager. Cette assise 11 s'étend dans un plan, dit plan horizontal, qui est en général parallèle au plancher de le voiture du véhicule ferroviaire. La fixation du siège au plancher peut être de tous types (boulonnage, soudage, etc.).

Le siège 10 comprend également un dossier 12, qui peut être articulé à l'assise ou monté sur un châssis fixé au plancher du véhicule de transport. Ce dossier 12 s'étend dans un plan qui forme avec l'assise un angle compris en général entre 90 et 120°, sans que cela ne soit limitatif de l'invention. Le dossier 12 comprend un appui-tête 15 monté sur la partie supérieure du dossier 12.

Le siège 10 comprend également deux accoudoirs latéraux 20, 30 agencés de part et d'autre du siège. Dans le mode de réalisation des figures, les accoudoirs sont portés par le dossier 12. Dans d'autres modes de réalisation, les accoudoirs peuvent être portés par l'assise ou par un châssis ancré au sol et portant le dossier et l'assise.

Dans toute la suite, seul l'accoudoir 20 est décrit en détail, étant entendu que l'accoudoir 30 est, selon le mode de réalisation des figures, identique à l'accoudoir 20.

L'accoudoir 20 selon le mode de réalisation des figures est parallélépipédique et s'étend le long de la direction longitudinale. Cet accoudoir 20 parallélépipédique comprend deux surfaces 21, 22 adjacentes destinées à former chacune une surface d'appui horizontal d'un bras d'un passager.

Les surfaces 21, 22 sont distinctes l'une de l'autre de telle sorte que le confort du passager soit différent selon la surface qui s'étend horizontalement pour recevoir le bras du passager.

La surface 22 présente une longueur *LO* et une largeur *LAmax* et la surface 21 présente une longueur *LO* et une largeur *LAmin,* inférieure à la largeur *LAmax.* Ainsi, la surface 22 forme une surface d'appui horizontal maximal alors que la surface 21 forme une surface d'appui horizontal minimal, non nul.

Sur la figure 1, la surface 21 de plus petite surface s'étend horizontalement pour recevoir le bras d'un passager alors que sur la figure 2, c'est la surface 22 de plus grande surface qui s'étend horizontalement pour recevoir le bras d'un passager. La position des accoudoirs sur la figure 1 est dite position de confort-assise car l'assise est privilégiée au détriment du confort des bras. En effet, dans la configuration de la figure 1, l'espace disponible pour s'assoir est maximal et l'espace disponible pour recevoir les bras du passager est minimal. A l'inverse, dans la configuration de la figure 2, la position est dite de confort-bras car l'espace disponible pour recevoir les bras du passager est maximal alors que l'espace disponible pour l'assise est minimal.

Chaque accoudoir est en outre monté sur une articulation permettant de faire pivoter l'accoudoir entre la position de confort-assise de la figure 1 dans laquelle l'espace pour l'assise est maximal et l'espace pour les bras est minimal, et la position de confort-bras de la figure 2 dans laquelle l'espace pour l'assise est minimal et l'espace disponible pour recevoir les bras est maximal.

Selon un mode de réalisation de l'invention, le basculement de la position confort-bras à la position confort-assise résulte du pivotement de l'accoudoir autour d'un axe longitudinal. Ce pivotement de l'accoudoir peut par exemple être obtenu par une articulation portant l'accoudoir.

Cette articulation peut par exemple comprendre une roue à rochet équipée d'un ressort de rappel ou d'une pièce plastique bistable, qui permet de faire tourner l'accoudoir autour de son axe longitudinal et de le bloquer dans l'une ou l'autre des deux positions possibles. Selon un mode de réalisation avantageux, l'axe de rotation est excentré pour permettre la rotation d'un accoudoir placé à proximité de la paroi latérale de la cabine ou de l'accoudoir du siège immédiatement adjacent.

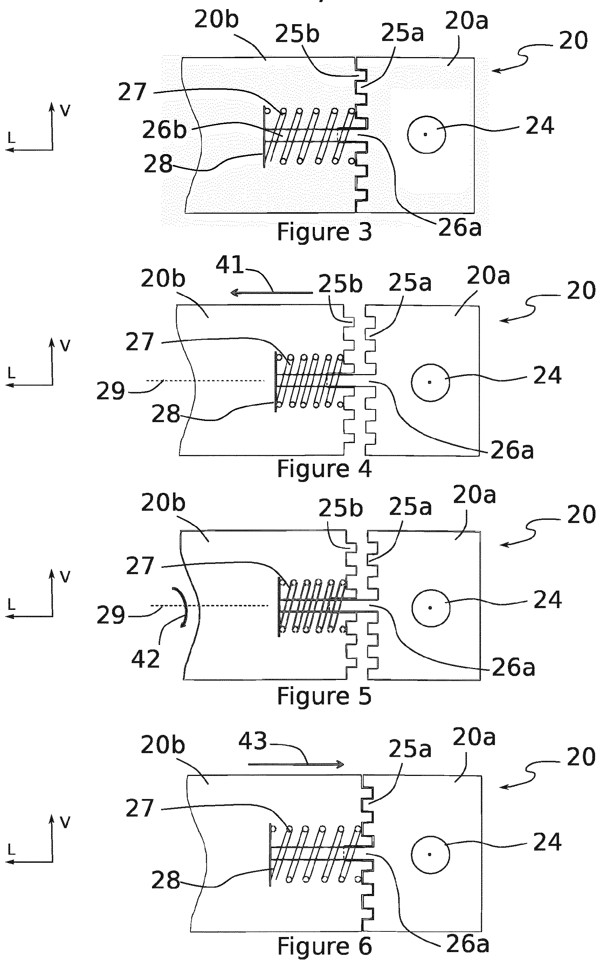

Les figures 3 à 6 illustrent un mode de réalisation de cette articulation portant l'accoudoir 20. L'accoudoir 20 est formé de deux tronçons complémentaires 20a, 20b. Le tronçon 20a est monté pivotant sur le dossier du siège autour d'un axe de rotation 24. Cet axe de rotation 24 permet de faire basculer l'accoudoir d'une position dans laquelle il est relevé pour s'étendre parallèlement au dossier du siège vers une position dans laquelle il s'étend parallèlement à l'assise du siège. C'est dans cette position parallèle à l'assise que l'accoudoir peut passer d'une position de confort-bras à une position de confort-assise et inversement. Dans la position relevée, l'accoudoir n'est pas utilisable par le passager dans la mesure où il s'étend dans le prolongement du dossier.

Selon d'autres modes de réalisation, le tronçon 20a peut être fixe par rapport au dossier de sorte que la position relevée de l'accoudoir n'est pas disponible.

L'accoudoir des figures 3 à 6 comprend également un deuxième tronçon 20b adapté pour pouvoir être pivoté autour d'un axe 29 longitudinal. Pour ce faire, les tronçons 20a et 20b comprennent chacun des dentures 25a, 25b complémentaires. Chaque dent s'étend selon la direction longitudinale et les dents sont réparties de manière régulière autour de l'axe longitudinal.

En outre, le tronçon 20a comprend un arbre 26a de pivotement s'étendant le long de l'axe 29 longitudinal et logé dans un alésage 26b complémentaire ménagé dans le tronçon 20b. Le tronçon 20b comprend également un ressort 27 de rappel relié solidairement d'une part à une surface 28 d'appui s'étendant perpendiculairement à la direction longitudinale et d'autre part à l'extrémité de l'arbre de pivotement 26a du tronçon 20a. Les dentures 25a, 25b, l'arbre de pivotement 26a et le ressort 27 de rappel sont choisis de telle sorte qu'un passager peut exercer une force de traction longitudinale sur le tronçon 20b pour séparer les dentures 25a, 25b complémentaires l'une de l'autre. Une fois les dentures séparées l'une de l'autre, le passager peut faire pivoter le tronçon 20b autour de l'arbre de pivotement 26a du tronçon 20a et modifier ainsi l'orientation de ce tronçon 20b par rapport au tronçon 20a. Une fois le tronçon 20b pivoté selon la nouvelle orientation souhaitée, le passager peut remboiter les dentures complémentaires de sorte que le tronçon 20b est à nouveau solidarisé au tronçon 20a. Ce remboitement est facilité par l'effet du ressort de rappel 27 qui tend à rapprocher les tronçons 20a, 20b l'un de l'autre.

La figure 3 illustre les deux tronçons 20a et 20b dans une première position, qui est par exemple la position de confort-assise.

La figure 4 illustre l'accoudoir lorsqu'un passager exerce une force de traction longitudinale sur le tronçon 20b pour le déboiter du tronçon 20a. Le déplacement du tronçon 20b résultant de cette action du passager est représenté par la flèche 41.

La figure 5 illustre le pivotement du tronçon 20b autour de l'axe 29 de pivotement longitudinal pour passer l'accoudoir de la position confort-assise de la figure 3 à la position de confort-bras de la figure 6. Ce pivotement est illustré par la flèche 42.

La figure 6 illustre le remboitement du tronçon 20b dans le tronçon 20a, obtenu par le déplacement longitudinal du tronçon 20b vers le tronçon 20a. Ce déplacement est illustré par la flèche 43 et est facilité par l'effet du ressort 27 de rappel. L'accoudoir est donc maintenant dans la position de confort-bras.

Sur les figures 3 et 6, la largeur du tronçon 20b est sensiblement identique, étant entendu que selon le confort visé dans chacune des positions confort-bras et confort-assise, la largeur du tronçon 20b peut être différent dans la position confort-bras et dans la position de confort-assise. Comme indiqué précédemment, la différence de confort entre les deux positions peut également concerner le type de revêtement, la forme, etc.

Ainsi et selon d'autres variantes non représentées, l'accoudoir présente une autre forme que la forme parallélépipédique de sorte que les conforts entre la première position et la deuxième position se distinguent non plus par la largeur des accoudoirs, mais par exemple par la forme de la surface d'appui des bras (bombée ou en creux), le matériau de la surface d'appui, la texture de la surface (avec picot ou lisse, souple ou dure), etc. Un tel accoudoir peut ainsi par exemple présenter une forme ovoïde, polyédrique tronquée, elliptique incurvée, etc.

Selon un autre mode de réalisation de l'invention non représenté, au moins un accoudoir comprend une paroi équipée d'une membrane élastique déformable latéralement qui délimite une enceinte de réception d'un fluide.

Selon ce mode de réalisation, le siège est équipé de moyens pneumatiques adaptés pour mettre la membrane déformable sous pression de manière à déformer la membrane élastique de l'accoudoir pour modifier la largeur de la surface d'appui. Dans ce mode de réalisation, l'accoudoir ne pivote plus autour d'une articulation, mais c'est la largeur de l'accoudoir qui est pilotée par les moyens pneumatiques.

Selon un autre mode de réalisation non représenté, la membrane élastiquement déformable est est tendue par un système de vérins (électriques et/ou pneumatiques).

Selon un autre mode de réalisation non représenté sur les figures, au moins un accoudoir latéral comprend une pluralité de baguettes montées chacune mobile en rotation entre une position relevée dans laquelle chaque baguette s'étend sensiblement parallèlement audit dossier dudit siège et une position déployée dans laquelle elle s'étend sensiblement parallèlement à ladite assise dudit siège.

On entend par le terme « baguette » une pièce longue, rigide et mince telle qu'une tige, plate ou légèrement bombée. La longueur des baguettes est de préférence inférieure ou égale à la longueur de l'assise du siège. Une pluralité de baguettes est donc formée de plusieurs tiges parallèles les unes aux autres.

Les baguettes forment ainsi la position de confort-bras de l'accoudoir lorsqu'elles sont toutes dans la position déployée. Elle forment la position de confort-assise lorsque seule la baguette latéralement la plus extrême est dans la position déployée, les autres baguettes étant dans la position relevée.

Elles peuvent également former une position intermédiaire lorsque les baguettes les plus proches de l'assise sont dans la position relevée, ce qui libère un peu d'espace pour l'assise et les baguettes les plus éloignées en position déployée forment alors l'accoudoir.

## Revendications

1. Siège (10) passager d'un véhicule de transport, notamment ferroviaire, comprenant une assise (11) s'étendant dans un plan, dit plan horizontal, un dossier (12) et au moins un accoudoir latéral (20, 30) destiné à former au moins une surface d'appui horizontal d'un bras d'un passager assis sur ladite assise (11) et adossé audit dossier (12) dudit siège passager,
**caractérisé en ce qu'**au moins un accoudoir latéral (20, 30) est monté sur ledit siège de façon à pouvoir passer d'une première position, dite position de confort-bras, dans laquelle ledit accoudoir (20, 30) présente une première surface d'appui (22) horizontal maximal de réception d'un bras d'un passager, vers au moins une deuxième position, dite position de confort-assise, dans laquelle ledit accoudoir présente une deuxième surface d'appui (21) horizontal minimal, non nul de réception d'un bras d'un passager, distincte de ladite première surface d'appui horizontal.

2. Siège selon la revendication 1, **caractérisé en ce que** ladite surface d'appui horizontal maximal (22) présente une longueur *LO* et une largeur *LAmax* et ladite surface d'appui horizontal minimal (21) présente une longueur *LO* et une largeur *LAmin,* inférieure à la largeur *LAmax.*

3. Siège selon l'une des revendications 1 ou 2, **caractérisé en ce qu'**il comprend en outre des moyens d'actionnement de chaque accoudoir (20, 30), configurés pour pouvoir passer chaque accoudoir de ladite position de confort-bras à ladite position de confort-assise et inversement.

4. Siège selon la revendication 3, **caractérisé en ce que** lesdits moyens d'actionnement sont des moyens de manoeuvre.

5. Siège selon l'une des revendications 1 à 4, **caractérisé en ce qu'**au moins un accoudoir latéral (20, 30) est configuré pour pouvoir, en outre, être placé dans une position, dite position intermédiaire, dans laquelle ledit accoudoir présente une troisième surface d'appui horizontal de réception d'un bras d'un passager, distincte des première et deuxième surfaces d'appui horizontal.

6. Siège selon l'une des revendications 1 à 5, **caractérisé en ce qu'**au moins un accoudoir latéral (20, 30) présente une forme parallélépipédique s'étendant le long d'une direction, dite direction longitudinale, et dont au moins deux surfaces longitudinales présentent des surfaces d'appui différentes de manière à pouvoir former au moins ladite première surface d'appui de ladite position confort-assise et ladite deuxième surface d'appui de ladite position confort-bras, et **en ce qu'**il comprend une articulation portée par ladite assise ou ledit dossier adaptée pour pouvoir faire pivoter ledit accoudoir autour d'un axe longitudinal entre ladite position de confort-bras et ladite position de confort-assise.

7. Siège selon l'une des revendications 1 à 5, **caractérisé en ce qu'**au moins un accoudoir comprend une paroi équipée d'une membrane élastique déformable latéralement qui délimite une enceinte de réception d'un fluide, et **en ce qu'**il comprend des moyens pneumatiques de mise sous pression de ladite enceinte adaptés pour pouvoir déformer ladite membrane élastique dudit accoudoir de manière à former ladite première surface d'appui de ladite position de confort-bras ou ladite deuxième surface d'appui de ladite position de confort-assise en fonction de ladite pression du fluide injecté dans ladite enceinte.

8. Siège selon l'une des revendications 1 à 5, **caractérisé en ce qu'**au moins un accoudoir latéral comprend une pluralité de baguettes montées chacune mobile en rotation entre une position relevée dans laquelle elle s'étend sensiblement parallèlement audit dossier dudit siège et une position déployée dans laquelle elle s'étend sensiblement parallèlement à ladite assise dudit siège, lesdites baguettes formant ladite position de confort-bras dudit accoudoir lorsqu'elles sont toutes dans la position déployée, et formant ladite position de confort-assise lorsque seule la baguette latéralement la plus extrême est dans ladite position déployée, les autres baguettes étant dans la position relevée.

9. Siège selon l'une des revendications 1 à 8, **caractérisé en ce qu'**il comprend deux accoudoirs latéraux (20, 30), chaque accoudoir étant monté sur ledit siège de façon à pouvoir passer de ladite position de confort-bras, dans laquelle ledit accoudoir présente une première surface d'appui horizontal de réception d'un bras d'un passager, vers ladite position de confort-assise, dans laquelle ledit accoudoir présente une deuxième surface d'appui horizontal de réception d'un bras d'un passager, distincte de ladite première surface d'appui horizontal.

10. Siège selon l'une des revendications 1 à 9, **caractérisé en ce que** chaque accoudoir (20, 30) est monté sur une articulation pivotante configurée pour pouvoir déplacer ledit accoudoir d'une position relevée dans laquelle il s'étend sensiblement parallèlement audit dossier dudit siège, à une position déployée dans laquelle il s'étend sensiblement parallèlement à ladite assise (11) dudit siège et dans laquelle il peut être déplacé de ladite position de confort-bras à ladite position de confort-assise.

11. Véhicule de transport comprenant une pluralité de sièges passagers, **caractérisé en ce qu'**au moins un siège passager (10) est un siège selon l'une des revendications 1 à 10.

## Patentansprüche

1. Fahrgastsitz (10) eines Transportfahrzeugs, insbesondere eines Schienenfahrzeugs, mit einem Sitz (11), der sich in einer Ebene, der sogenannten Horizontalebene, erstreckt, einer Rückenlehne (12) und mindestens einer seitlichen Armlehne (20, 30), die dazu bestimmt ist, mindestens eine horizontale Auflagefläche für einen Arm eines Fahrgasts auszubilden, der auf dem Sitz (11) sitzt und sich gegen die Rückenlehne (12) des Fahrgastsitzes lehnt,
**dadurch gekennzeichnet, dass** mindestens eine seitliche Armlehne (20, 30) so an dem Sitz angebracht ist, dass sich diese von einer ersten Position, Komfort-Arm-Position genannt, in der die Armlehne (20, 30) eine erste maximale horizontale Auflagefläche (22) zur Aufnahme eines Arms eines Fahrgasts aufweist, in mindestens eine zweite Position, die Komfort-Sitz-Position genannt, bewegen kann, in der die Armlehne eine zweite minimale horizontale Auflagefläche (21) ungleich Null zur Aufnahme eines Arms eines Fahrgasts aufweist, die von der ersten horizontalen Auflagefläche verschieden ist.

2. Sitz nach Anspruch 1, **dadurch gekennzeichnet, dass** die maximale horizontale Auflagefläche (22) eine Länge LO und eine Breite LAmax aufweist und die minimale horizontale Auflagefläche (21) eine Länge LO und eine Breite LAmin aufweist, die kleiner als die Breite LAmax ist.

3. Sitz nach einem der Ansprüche 1 oder 2, **dadurch gekennzeichnet, dass** dieser ferner Mittel zur Betätigung jeder Armlehne (20, 30) umfasst, die ausgestaltet sind, jede Armlehne von der Komfort-Arm-Position zur Komfort-Sitz-Position und umgekehrt bewegen zu können.

4. Sitz nach Anspruch 3, **dadurch gekennzeichnet, dass** es sich bei den Betätigungsmitteln um Manövriermittel handelt.

5. Sitz nach einem der Ansprüche 1 bis 4, **dadurch gekennzeichnet, dass** mindestens eine seitliche Armlehne (20, 30) ausgestaltet ist, in eine so genannte Zwischenstellung gebracht zu werden, in der die Armlehne eine dritte horizontale Auflagefläche zur Aufnahme des Arms eines Fahrgastes aufweist, die von der ersten und zweiten horizontalen Auflagefläche verschieden ist.

6. Sitz nach einem der Ansprüche 1 bis 5, **dadurch gekennzeichnet, dass** mindestens eine seitliche Armlehne (20, 30) die Form eines Parallelepipeds aufweist, das sich in einer Richtung, der sogenannten Längsrichtung, erstreckt und von dem mindestens zwei Längsflächen unterschiedliche Auflageflächen aufweisen, um mindestens die erste Auflagefläche der Komfort-Sitz-Position und die zweite Auflagefläche der Komfort-Arm-Position ausbilden zu können, und dass der Sitz ein von der Sitzfläche oder der Rückenlehne getragenes Gelenk umfasst, das geeignet ist, dass die Armlehne um eine Längsachse zwischen der Komfort-Arm-Position und der Komfort-Sitz-Position geschwenkt werden kann.

7. Sitz nach einem der Ansprüche 1 bis 5, **dadurch gekennzeichnet, dass** mindestens eine Armlehne eine Wand umfasst, die mit einer seitlich verformbaren elastischen Membran versehen ist, die einen Raum zur Aufnahme eines Fluids begrenzt, und dass dieser pneumatische Mittel zur Druckbeaufschlagung des Raums umfasst, die geeignet sind, die elastische Membran der Armlehne zu verformen, um die erste Auflagefläche der Komfort-Arm-Position oder die zweite Auflagefläche der Komfort-Sitz-Position in Abhängigkeit von dem Druck des in den Raum eingeleiteten Fluids auszubilden.

8. Sitz nach einem der Ansprüche 1 bis 5, **dadurch gekennzeichnet, dass** mindestens eine seitliche Armlehne mehrere Stäbe umfasst, die jeweils drehbar zwischen einer angehobenen Position, in der sie sich im Wesentlichen parallel zur Rückenlehne des Sitzes erstrecken, und einer ausgefahrenen Position, in der sie sich im Wesentlichen parallel zur Sitzfläche des Sitzes erstrecken, montiert sind, worin die Stäbe die Komfort-Arm-Position der Armlehne ausbilden, wenn sie sich alle in der ausgefahrenen Position befinden, und die Komfort-Sitz-Position ausbilden, wenn sich nur der seitlich am weitesten entfernte Stab in der ausgefahrenen Position befindet, während die anderen Stäbe sich in der angehobenen Position befinden.

9. Sitz nach einem der Ansprüche 1 bis 8, **dadurch gekennzeichnet, dass** dieser zwei seitliche Armlehnen (20, 30) umfasst, worin jede Armlehne an dem Sitz derart angebracht ist, dass diese von der Komfort-Arm-Position, in der die Armlehne eine erste horizontale Auflagefläche zur Aufnahme des Arms eines Fahrgastes aufweist, in die Komfort-Sitz-Position übergehen kann, in der die Armlehne eine zweite horizontale Auflagefläche zur Aufnahme des Arms eines Fahrgastes aufweist, die von der ersten horizontalen Auflagefläche verschieden ist.

10. Sitz nach einem der Ansprüche 1 bis 9, **dadurch gekennzeichnet, dass** jede Armlehne (20, 30) an einem Drehgelenk angebracht ist, das ausgestaltet ist, die Armlehne aus einer angehobenen Position, in der sie sich im Wesentlichen parallel zur Rückenlehne des Sitzes erstreckt, in eine ausgefahrene Position zu bewegen, in der sie sich im Wesentlichen parallel zur Sitzfläche (11) des Sitzes erstreckt und in der diese von der Komfort-Arm-Position in die Komfort-Sitz-Position bewegt werden kann.

11. Transportfahrzeug mit mehreren Fahrgastsitzen, **dadurch gekennzeichnet, dass** mindestens ein Fahrgastsitz (10) ein Sitz nach einem der Ansprüche 1 bis 10 ist.

## Claims

1. Passenger seat (10) of a transport vehicle, in particular a railway vehicle, comprising a seat (11) extending in a plane, called the horizontal plane, a backrest (12) and at least one side armrest (20, 30) intended to forming at least one horizontal support surface for an arm of a passenger seated on said seat (11) and leaning against said backrest (12) of said passenger seat, **characterized in that** at least one side armrest (20, 30) is mounted on said seat so as to be able to move from a first position, called the comfort-arm position, in which said armrest (20, 30) has a first maximum horizontal support surface (22) for receiving an arm of a passenger, to at least a second position, called the comfort-seated position, in which said armrest has a second non-zero minimum horizontal support surface (21), for receiving a passenger's arm, distinct of said first horizontal bearing surface.

2. Seat according to Claim 1, **characterized in that** the said maximum horizontal support surface (22) has a length LO and a width LAmax and the said minimum horizontal support surface (21) has a length LO and a width LAmin, less than the width LAmax.

3. Seat according to one of Claims 1 or 2, **characterized in that** it further comprises means for actuating each armrest (20, 30), configured to be able to move each armrest from said comfort-arm position to said comfort-seat and vice versa.

4. Seat according to Claim 3, **characterized in that** the said actuating means are maneuvering means.

5. Seat according to one of Claims 1 to 4, **characterized in that** at least one side armrest (20, 30) is configured so as to be able to be placed in a position, called the intermediate position, in which the said armrest has a third horizontal support surface for receiving a passenger's arm, distinct from the first and second horizontal support surfaces.

6. Seat according to one of Claims 1 to 5, **characterized in that** at least one side armrest (20, 30) has a parallelepiped shape extending along a direction, called the longitudinal direction, and of which at least two surfaces longitudinal have different bearing surfaces so as to be able to form at least said first bearing surface of said comfort-sitting position and said second bearing surface of said comfort-arm position, and **in that** it comprises an articulation carried by said seat or said back adapted to be able to pivot said armrest about a longitudinal axis between said comfort-arm position and said comfort-seat position.

7. Seat according to one of Claims 1 to 5, **characterized in that** at least one armrest comprises a wall equipped with a laterally deformable elastic membrane which delimits an enclosure for receiving a fluid, and **in that** it comprises pneumatic means for pressurizing said enclosure adapted to be able to deform said elastic membrane of said armrest so as to form said first bearing surface of said comfort-arm position or said second bearing surface of said comfort-sitting position in function of said pressure of the fluid injected into said enclosure.

8. Seat according to one of Claims 1 to 5, **characterized in that** at least one side armrest comprises a plurality of rods each mounted so as to be able to rotate between a raised position in which it extends substantially parallel to the said backrest of the said seat and a position deployed in which it extends substantially parallel to said seat of said seat, said strips forming said comfort-arm position of said armrest when they are all in the deployed position, and forming said comfort-seat position when only the strip laterally most extreme is in said deployed position, the other rods being in the raised position.

9. Seat according to one of Claims 1 to 8, **characterized in that** it comprises two side armrests (20, 30), each armrest being mounted on the said seat so as to be able to pass from the said comfort-arm position, in which the said armrest has a first horizontal support surface for receiving a passenger's arm, towards said comfort-seated position, in which said armrest has a second horizontal support surface for receiving a passenger's arm , separate from said first horizontal bearing surface.

10. Seat according to one of Claims 1 to 9, **characterized in that** each armrest (20, 30) is mounted on a pivoting joint configured to be able to move the said armrest from a raised position in which it extends substantially parallel to the said backrest of the said seat, in a deployed position in which it extends substantially parallel to said seat (11) of said seat and in which it can be moved from said comfort-arm position to said comfort-seat position.

11. Transport vehicle comprising a plurality of passenger seats, **characterized in that** at least one passenger seat (10) is a seat according to one of Claims 1 to 10.
